(19) Europäisches Patentamt
European Patent Office
Office européen des brevets

(11) **EP 1 691 993 B1**

(12) **EUROPÄISCHE PATENTSCHRIFT**

(45) Veröffentlichungstag und Bekanntmachung des Hinweises auf die Patenterteilung:
**06.04.2011  Patentblatt 2011/14**

(21) Anmeldenummer: **04802959.9**

(22) Anmeldetag: **13.12.2004**

(51) Int Cl.:
*B60C 23/04* *(2006.01)*      *B60C 23/06* *(2006.01)*

(86) Internationale Anmeldenummer:
**PCT/DE2004/002773**

(87) Internationale Veröffentlichungsnummer:
**WO 2005/056311 (23.06.2005 Gazette 2005/25)**

(54) **SENSORTRANSPONDER UND VERFAHREN ZUR REIFENAUFSTANDSLÄNGEN- UND RADLASTMESSUNG**

SENSOR TRANSPONDER AND METHOD FOR MEASURING TIRE CONTACT LENGTHS AND WHEEL LOAD

TRANSPONDEUR DETECTEUR ET PROCEDE DE MESURE DE LA LONGUEUR DE SOULEVEMENT DE PNEUMATIQUE ET DE LA CHARGE DE ROUE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **11.12.2003  DE 10358277**

(43) Veröffentlichungstag der Anmeldung:
**23.08.2006  Patentblatt 2006/34**

(73) Patentinhaber:
  • **Conti Temic microelectronic GmbH**
    **90411 Nürnberg (DE)**
  • **Continental AG**
    **30165 Hannover (DE)**

(72) Erfinder:
  • **SCHILLINGER, Jakob**
    **85080 Gaimersheim (DE)**
  • **VON LUTZ, Rainer**
    **73230 Kirchheim (DE)**
  • **CYLLIK, Adrian**
    **30159 Hannover (DE)**
  • **LEHMANN, Jörg**
    **30451 Hannover (DE)**

(56) Entgegenhaltungen:
**US-A1- 2003 058 118    US-A1- 2003 062 994**

**Beschreibung**

Die vorliegende Erfindung betrifft einen Sensortransponder und ein Verfahren zur Reifenaufstandslängen- und Radlastmessung.

Aus der deutschen Patentschrift DE 44 02 136 C2 ist bereits ein im Fahrzeugreifen angeordneter Sensortransponder bekannt, der einen Beschleunigungssensor und einen Temperatursensor aufweist.

Aus der US 4,246,567 ist ein Sensortransponder mit einem Drucksensor bekannt.

US2003/0058118 A1 zeigt einen Sensortransponder mit Beschleunigungssensor zur Befestigung auf der Innenseite der Lauffläche eines Reifens. Mit Hilfe des Beschleunigungssignals wird die Reifenaufstandslänge berechnet.

Aufgabe der Erfindung ist die einfache und kostengünstige Berechnung der Reifenaufstandsfläche, da diese als "wirksame" Kontaktfläche des Reifens mit der Fahrbahn sowohl das Traktionsverhalten (Kraftübertragungsverhalten, Bremsverhalten) als auch die Reibungsverluste wegen Walkarbeit signifikant beeinflusst. Ferner soll eine hierzu geeignete Vorrichtung geschaffen werden.

Diese Aufgabe wird durch einen Sensortransponder mit den Merkmalen von Anspruch 4 und ein zugehöriges Verfahren mit den Merkmalen von Anspruch 1 gelöst.

Vorteilhafte Weiterbildungen der Erfindung sind in den Unteransprüchen beschrieben.

In der nachfolgenden Beschreibung werden die Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:

Fig. 1     eine schematische Ansicht einer Anordnung eines erfindungsgemäßen Sensortranponders mit einem Be- schleunigungssensor in einem Reifen,

Fig. 2     ein Diagramm, in dem der Verlauf der Zentrifugal- beschleunigung in Abhängigkeit vom Umdrehungswin- kel des Reifens dargestellt ist,

Fig. 3     fünf weitere Diagramme zur Auswertung der Signale des Sensortransponders bei einem Beschleunigungs- sensor mit Tiefpass-Verhalten gemäß einer ersten Ausführungsform und

Fig. 4     fünf Diagramme zur Auswertung der Signale eines Sensortransponders mit einem Beschleunigungssensor mit differenzierendem Verhalten gemäß einer zwei- ten Ausführungsform der vorliegenden Erfindung.

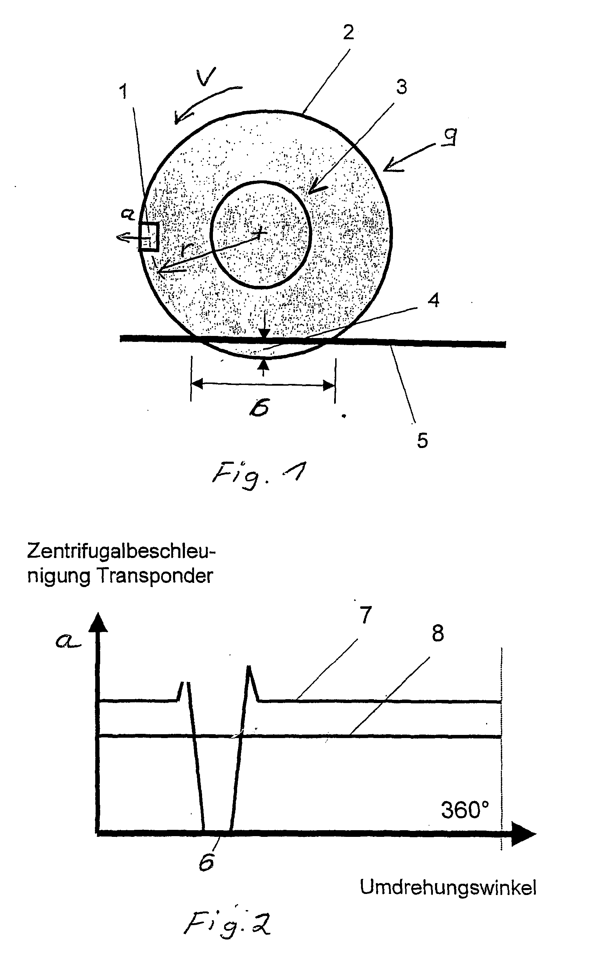

Gemäß Fig. 1 ist ein Transponder bzw. Sensortransponder 1 zur Messung einer Reifenaufstandslänge 6 erfindungsgemäß auf der Innenseite einer Reifenlauffläche 2 befestigt. Mittels des Transponders 1 können Daten zu einer oder mehreren beispielsweise am Fahrzeug angeordneten Sende- und Empfangsantennen (nicht dargestellt) drahtlos übertragen werden. Diese Daten können dann beispielsweise an eine übergeordnete Zentraleinheit (nicht dargestellt) als Digitalwert oder auch als auf einen HF-Träger aufmoduliertes Signal (Phasen-, Frequenz-, Amplituden- oder Lastmodulation) übertragen werden. Sinnvollerweise, aber nicht notwendigerweise, kann insbesondere in der Zentraleinheit ein Vergleich zwischen den Einzeldaten bzw. Signalen sowie beispielsweise eine Korrektur des Reifentyps, der Temperatur, des Reifendrucks etc. sowie eine Weiterleitung an übergeordnete Systeme durchgeführt werden.

Der Transponder 1 umfasst zumindest einen Beschleunigungssensor (nicht dargestellt). Die Beschleunigungsmessung kann beispielsweise nach kapazitivem (Mikromechanik, Feder-Masseflächen), piezoresistivem (Mikromechanik, DMS-seismische Masse), ferroelektrischem (magnetische Flussänderung), induktivem (Feder-Magnet-Induktion), elektrodynamischem (Feder-Elektromagnet) oder nach dem piezoelektrischem Prinzip (Material: insbesondere Quarz, Piezokeramik oder Piezofolie; Verfahren: insbesondere Biegung, Axial, Torsion oder Scherung) erfolgen.

Bei zusätzlich generatorisch wirkenden Messprinzipien, wie beispielsweise den piezoelektrischen, kann die Beschleunigungsenergie zusätzlich den Transponder 1 mit Energie versorgen sowie einen elektrischen Pufferspeicher aufladen. Insbesondere bei Erreichen hinreichender Energie können die Messsignale dann an die Empfangsantenne bzw. die Zentraleinheit übertragen werden.

Der zumindest eine Beschleunigungssensor kann auch zusätzlich zur Triggerung der Signalübertragung verwendet werden, da zur Schonung einer Batterie nur bei Fahrt eine Messung wichtig bzw. sinnvoll ist. Zusätzlich kann auch die Winkellage des Sensortransponders 1 ermittelt werden und aus dieser Kenntnis ein günstiger Zeitpunkt für die optimale Überlappung der korrespondierenden Sende- und Empfangsantenne(n) bestimmt werden.

Gemäß Fig. 1 wird eine Einsenkung 4 des Reifens 2 von der Radlast, dem Reifentyp (Abmessungen, Aufbau, Material etc.) und dem Reifeninnendruck bestimmt. Diese Einsenkung 4 führt zu einer bestimmten Reifenaufstandslänge 6 auf einer Fahrbahn 5.

Durch die Befestigung auf der Innenseite der Lauffläche 2 wird der Transponder 1 dem in Fig. 2 für eine vollständige Umdrehung, d.h. einen Umdrehungswinkel von 0° bis 360°, dargestellte Verlauf 7 der Zentrifugalbeschleunigung a ausgesetzt. Auf einen rein theoretisch an einer Felge 3 montierter Sensortransponder würde hingegen der in Fig. 2 ebenfalls dargestellte, kontinuierliche Verlauf 8 der Zentrifugalbeschleunigung a wirken.

Die Zentrifugalbeschleunigung a berechnet sich gemäß der folgenden bekannten Formel:

$$a = v^2/r$$

Dies bedeutet, dass die Zentrifugalbeschleunigung a bei einem konstanten Radius r (wenn Transponder auf der Felge 3 angeordnet wäre) und konstanter Geschwindigkeit v ebenfalls konstant ist (Beschleunigungsverlauf 8). Im Bereich der Reifenaufstandslänge 6 wirkt wegen der Montage auf der inneren Mantelfläche bzw. der Innenseite der Reifenlauffläche 2 keine Zentrifugalbeschleunigung 7 auf den Sensortransponder 1, da der Radius r hier gegen Unendlich geht. Beim Eintritt des Sensortransponders 1 in den Bereich der Reifenaufstandslänge 6 verringert sich der Radius r zunächst, so dass es hier zu Beschleunigungsspitzen kommt. Entsprechendes gilt für den Austritt des Sensortransponders 1 aus dem Bereich der Reifenaufstandslänge 6.

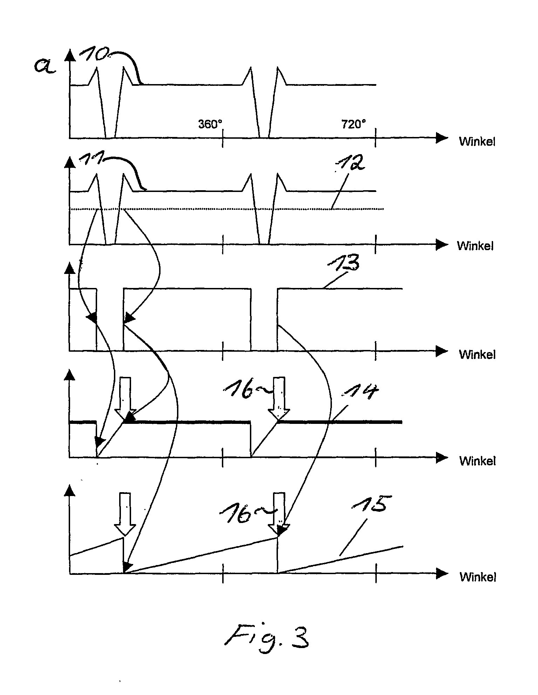

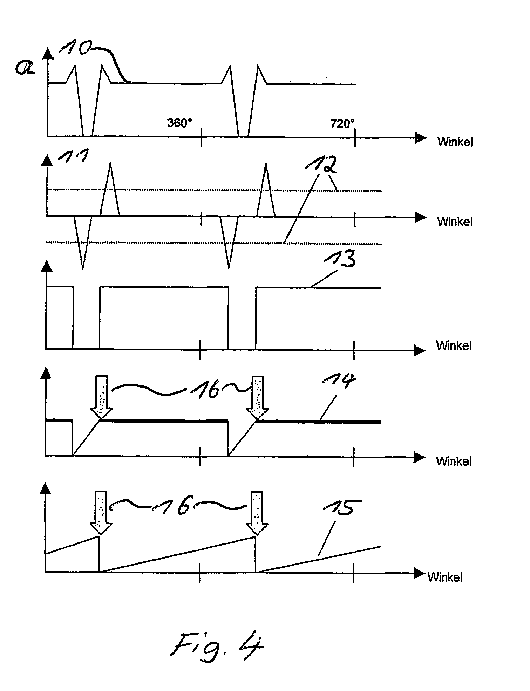

Messtechnisch kann die Reifenaufstandslänge oder auch Latschlänge 6 erfindungsgemäß durch die Auswertung der in Fig. 2 gezeigten Zentrifugalbeschleunigung 7 des Sensortransponders 1 ermittelt werden. Hierzu wird zunächst mittels des zumindest einen Beschleunigungssensors der zeitliche bzw. winkelabhängige Verlauf der Beschleunigung a erfasst und in einen korrespondierenden Spannungsverlauf umgewandelt. Über eine in Zusammenhang mit Fig. 3 und Fig. 4 näher erläuterte Schwellenwert- und Gradientenauswertung kann dann erfindungsgemäß die zur Vollumdrehung relative und geschwindigkeitsunabhängige Reifenaufstandslänge 6 berechnet werden.

Aus der Kenntnis des Reifentyps kann dann mit hinreichender Genauigkeit auch die Reifenaufstandsfläche (Latsch) berechnet werden. Eine weitere wichtige Einflussgröße, die Radlast, kann anschließend mit Hilfe des Reifeninnendrucks, der Temperatur und der Reifenaufstandsfläche berechnet werden.

Aus dem Vergleich dieser Einzelergebnisse (Reifenaufstandslänge 6, Radlast, Reifenaufstandsfläche) über die gesamte Bereifung, also alle Räder, kann mit Vorteil auf relativ zu einander und/oder absolut fehlerhafte Reifendrücke geschlossen werden. Des weiteren können die Radlast und die Reifenaufstandslänge 6 auf vorgegebene Grenzwerte überprüft und deren Überschreitung gespeichert und gegebenenfalls angezeigt werden. In der weiteren Ausgestaltung der vorliegenden Erfindung können diese Informationen dann beispielsweise einer Antriebsstrang-Elektronik zur Optimierung der Motor-Getriebe-Einstellung, einer Fahrwerkselektronik zur Einstellung der Dämpfer-Feder-Charakteristik und/oder einer elektronischen Bremse zur Anpassung der Bremskoeffizienten bereitgestellt werden.

Die absolute (zeitbezogene) oder relative (winkelbezogene) Reifenaufstandslänge 6 kann dazu beispielsweise an die übergeordnete Zentraleinheit als Digitalwert oder als auf den HF-Träger aufmoduliertes Signal (Phasen-, Frequenz-, Amplituden- oder Lastmodulation) übertragen werden.

Die Auswertung kann beispielsweise auf die nachfolgend in Zusammenhang mit Fig. 3 und Fig. 4 beschriebenen Weisen erfolgen. Gemäß Fig. 3 wird bei einem DC-fähigen (DC = Gleichstrom) Beschleunigungssensor mit Tiefpassverhalten die Zentrifugalbeschleunigung 10 mit einem Beschleunigungssensor (Ausgangssignal 11) erfasst und mit Hilfe einer Komparatorschwelle 12 digitalisiert. In Fig. 3 nicht dargestellt sind beispielsweise überlagerte Vertikalbeschleunigungen, die von der Beschaffenheit der Fahrbahn 5 (Fig. 1) herrühren können.

Das Ausgangssignal 13 des Komparators steuert einen Integrierer 14, der in Analogtechnik (OPAMP und/oder RC-Glieder) oder Digitaltechnik (Zähler) realisiert werden kann und dessen latschgesteuerter Endwert (markiert durch dicke Pfeile 16) bis zum Abschluss der Periode gespeichert wird. Mit der jeweils positiven Flanke des Komparatorausgangs wird ein weiterer Integrierer 15 gestartet, gestoppt und gespeichert. Dessen Ausgangssignal (markiert durch dicke Pfeile 16) stellt ein Maß für die Umdrehungsdauer des Reifens 9 dar. Die Quotientenbildung der Signale 14 und 15 bzw. dieses Spannungsverhältnis ergeben die auf den Reifenumfang bezogene relative Reifenaufstandslänge 6, die somit unabhängig von der Geschwindigkeit v bzw. der Drehzahl ist. Anstelle des Integrierers 15 kann auch die Raddrehzahl zur Berechnung herangezogen werden.

Die Signalauswertung eines dazu alternativen, nicht DC-fähigen Beschleunigungssensors mit differenzierendem Verhalten ist in Fig. 4 dargestellt, wobei identische bzw. ähnliche Bauteile oder Signalverläufe mit den gleichen Bezugzeichen wie in Fig. 3 versehen sind. Dabei wird das Ausgangssignal 11 des Beschleunigungssensors in vergleichbarer bzw. ähnlicher Weise gegen Schwellwerte verglichen und ausgewertet. Insbesondere erfolgt wieder die Quotienten- bzw. Verhältnisbildung der Signale 14 und 15, wodurch die Reifenaufstandslänge 6 unabhängig von der Geschwindigkeit v ermittelt werden kann.

Diese beiden erfindungsgemäßen Verfahren ermitteln zwar direkt die Reifenaufstandslänge 6, aus der Kenntnis des Reifentyps kann aber mit hinreichender Genauigkeit auch die Reifenaufstandsfläche (Latsch) berechnet werden. Eine weitere wichtige Einflussgröße, die Radlast, kann dann mit Hilfe des Reifeninnendrucks, der Temperatur und der Reifenaufstandsfläche berechnet werden. Mit Hilfe des erfindungsgemäßen Sensortransponders 1 und insbesondere dessen besonderer Anordnung können die entsprechenden Daten gewonnen werden. Es können also in vorteilhafter Weise aus der Reifenaufstandslänge 6 durch Bezug zum bzw. in Abhängigkeit vom Reifeninnendruck, der Raddrehzahl und/oder dem verwendeten Reifentyps erfindungsgemäß auch die Reifenaufstandsfläche und die Radlast berechnet werden.

In einer bevorzugten, vollen Ausbaustufe umfasst der Sensortransponder 1 neben dem zumindest einen Beschleunigungssensor vorzugsweise auch Sensoren für Temperatur und Druck sowie einen Speicher für die reifenspezifischen Parameter.

Im folgenden werden nochmals die wesentlichen Merkmale und vorteilhaften Weiterbildungen des erfindungsgemäßen Sensortransponders 1 aufgeführt. Die Montage des Transponders 1 erfolgt erfindungsgemäß auf der Innenseite der Lauffläche 2 des Reifens 9. Er weist zumindest einen Beschleunigungssensor zur oben beschriebenen Messung der Reifenaufstandslänge 6 auf. Zusätzlich kann am Sensortransponder 1 ein Speicher für die reifenspezifischen Parameter zur Berechnung der Reifenaufstandsfläche integriert sein. Weiterhin umfasst der Transponder 1 optional einen Drucksensor zur Reifendrucküberwachung und zur Radlastberechnung. Zusätzlich kann auch ein Temperatursensor zur Temperaturmessung und Korrektur der Messwerte am Sensortransponder vorgesehen sein.

Betzugszeichenliste:

| | |
|---|---|
| 1 | Sensortransponder |
| 2 | Reifenlauffläche |
| 3 | Felge |
| 4 | Einsenkung |
| 5 | Fahrbahn |
| 6 | Reifenaufstandslänge |
| 7 | Zentrifugalbeschleunigung |
| 8 | Zentrifugalbeschleunigung |
| 9 | Reifen |
| 10 | Zentrifugalbeschleunigung |
| 11 | Ausgangssignal Beschleunigungssensor |
| 12 | Komparatorschwelle |
| 13 | Ausgangssignal Komparator |
| 14 | Integrierer |
| 15 | Integrierer |
| 16 | Endwert bzw. Ausgangssignal (dicke Pfeile) |
| a | Zentrifugalbeschleunigung |
| r | Radius |
| v | Geschwindigkeit |

**Patentansprüche**

1. Verfahren zur Berechnung einer Reifenaufstandslänge (6), wobei ein Sensortransponder (1) mit zumindest einem Beschleunigungssensor an der Innenseite einer Lauffläche (2) eines Reifens (9) angeordnet werden, die Signale des Beschleunigungssensors mit Schwellenwerten verglichen und anschließend integriert werden und durch Quotientenbildung geschwindigkeitsunabhängig die Ermittlung der Reifenaufstandslänge (6) erfolgt.

2. Verfahren nach Anspruch 1, **dadurch gekennzeichnet, dass** aus der Reifenaufstandslänge (6) mittels reifenspezifischer Parameter die Reifenaufstandsfläche (Latsch) berechnet wird.

3. Verfahren nach Anspruch 2, **dadurch gekennzeichnet, dass** aus der Reifenaufstandsfläche und dem Reifendruck die Radlast berechnet wird.

4. Sensortransponder (1) zur Befestigung auf der Innenseite der Lauffläche (2) eines Reifens (9), wobei der Sensortransponder (1) aufweist:

   a) eine Einrichtung zur Übertragung von Messdaten aus dem Reifen (9) an eine Empfangseinrichtung;
   b) zumindest einen Beschleunigungssensor (1);
   c) einen Speicher für reifenspezifische Parameter und
   d) Mittel zur Berechnung der Reifenaufstandslänge (6) gemäß einem Verfahren nach einem der vorangehenden Ansprüche.

5. Sensortransponder (1) nach Anspruch 4 , **dadurch gekennzeichnet, dass** der Sensortransponder (1) zumindest einen Drucksensor aufweist.

6. Sensortransponder (1) nach einem der vorhergehenden Ansprüche 4 bis 5, **dadurch gekennzeichnet, dass** der Sensortransponder (1) zumindest einen Temperatursensor aufweist.

**Claims**

1. A method for calculating a tire contact length (6), wherein a sensor transponder (1) with at least one acceleration sensor is mounted on the inside of a tread (2) of a tire (9), the signals of the acceleration sensor are compared with threshold values and subsequently integrated and the tire contact length (6) is determined by quotient formation in a manner that is independent of speed.

2. A method of claim 1, **characterized in that** the tire contact patch (footprint) is calculated from the tire contact length (6) using tire-specific parameters.

3. A method of claim 2, **characterized in that** the wheel load is calculated from the tire contact patch and the tire pressure.

4. A sensor transponder (1) for attachment to the inside of the tread (2) of a tire (9), said sensor transponder (1) having:

   a) a device for transmitting measurement data from the tire (9) to a receiver device;
b) at least one acceleration sensor (1);
c) a memory for tire-specific parameters and
d) means for calculating the tire contact length (6) according to a method of any one of the preceding claims.

**5.** A sensor transponder (1) of claim 4, **characterized in that**
the sensor transponder (1) has at least one pressure sensor.

**6.** A sensor transponder (1) of any one of the preceding claims 4 to 5, **characterized in that**
the sensor transponder (1) has at least one temperature sensor.


**Revendications**

**1.** Procédé de calcul d'une longueur de contact de pneu (6), un transpondeur-capteur (1) avec au moins un capteur d'accélération étant disposé sur le côté intérieur d'une bande de roulement (2) d'un pneu (9), les signaux du capteur d'accélération étant comparés à des valeurs de seuil et puis intégrés, et la détermination de la longueur de contact de pneu (6) intervenant par la formation du quotient indépendamment de la vitesse.

**2.** Procédé selon la revendication 1, **caractérisé en ce que** la surface de contact du pneu (surface d'appui) est calculée à partir de la longueur de contact de pneu (6) au moyen de paramètres spécifiques au pneu.

**3.** Procédé selon la revendication 2, **caractérisé en ce que** la charge sur la roue est calculée à partir de la surface de contact du pneu et de la pression du pneu.

**4.** Transpondeur-capteur (1) pour la fixation sur le côté intérieur de la bande de roulement (2) d'un pneu (9), le transpondeur-capteur (1) présentant :

a) un équipement pour la transmission de données de mesure à partir du pneu (9) vers un équipement de réception ;
b) au moins un capteur d'accélération (1) ;
c) une mémoire pour des paramètres spécifiques au pneu et
d) des moyens de calcul de la longueur de contact de pneu (6) conformément à un procédé selon une des revendications précédentes.

**5.** Transpondeur-capteur (1) selon la revendication 4, **caractérisé en ce que** le transpondeur-capteur (1) présente au moins capteur de pression.

**6.** Transpondeur-capteur (1) selon une des revendications précédentes 4 à 5, **caractérisé en ce que** le transpondeur-capteur (1) présente au moins un capteur de température.

Fig. 1

Zentrifugalbeschleunigung Transponder

360°

Umdrehungswinkel

Fig. 2

Fig. 3

*Fig. 4*

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4402136 C2
- US 4246567 A
- US 20030058118 A1